# EUROPEAN PATENT APPLICATION

(11) **EP 3 293 391 A1**
(43) Date of publication of application: **14.03.2018**
(21) Application number: 15898379.1
(22) Date of filing: 19.10.2015
(51) Int. Cl.: F03B 13/16, F03G 3/06, F03G 7/08

(54) **PENDULUM ELECTRICITY-GENERATING DEVICE USING NATURAL ENERGY**

(30) Priority: 13.07.2015 KR 20150098893
(71) Applicant: Seojun, Gangneung-si, Gangwon-do 25490 (KR)
(72) Inventor: JUNG, Minshy, Gangneung-si Gangwon-do 25517 (KR)
(74) Representative: Lahrtz, Fritz
(86) International application number: PCT/KR2015/011028
(87) International publication number: WO 2017/010619

(57) **Abstract**

The present invention relates to a pendulum electricity-generating device using natural energy, which is installed on the seashore, and which can generate electric energy stably and efficiently according to the flow on the sea surface. The present invention comprises: a housing that floats on the sea surface using buoyancy; buoyancy wings integrally connected to both sides of the housing so as to rotate the housing according to the floating movement of the sea surface; a power unit installed inside the housing in the longitudinal direction thereof; and a gravity body installed in the longitudinal direction of the power unit so as not to rotate in conformity with rotation of the housing, thereby transferring the rotational force to the power unit according to the floating movement of the housing. The present invention, described above, has the following advantages: firstly, even when installed and used at a place where the sea surface does not undergo a sufficient floating movement, stable electricity generation can be guaranteed while flexibly dealing with the horizontal flow of waves or the vertical flow of waves. Secondly, easy fracturing can be prevented even in the case of an abrupt floating movement of the sea surface; the characteristic feature, which is for the purpose of generating electricity using natural energy, is provided inside the housing such that, by effectively preventing corrosion of the constituent elements of the electricity-generating device by the salt in the seawater, the service life is increased, thereby reducing the maintenance cost; and configuration of multiple pendulum generators can maximize the efficiency of electricity generation. Thirdly, multiple generation units are installed and configured on the outside of the power unit so as to transfer the rotational force to the power unit such that, even if the housing, the buoyancy wings, and the power unit undergo abrupt floating movements according to the flow on the sea surface, a stable use can be guaranteed while flexibly dealing with the same.

## Description

### [Technical Field]

The present invention relates to a pendulum electricity-generating device using natural energy, and more particularly, to a pendulum electricity-generating device using natural energy, the pendulum electricity-generating device being capable of stably and continuously generating electricity using natural wave energy by rotating a housing floated on the sea surface.

### [Background Art]

Electricity generation using natural energy refers to generation of electric energy by driving an electricity-generator using kinetic energy of wind or water.

Among electricity-generators using natural energy, a pendulum-type wave electricity-generating device rotates an electricity-generator using motion of the sea surface and generates electric energy using such rotation.

For example, as disclosed in Documents 1 and 2, a conventional pendulum-type wave electricity-generating device using natural energy generates electric energy by transmitting rotational force corresponding to horizontal motion or vertical motion of the waves, to an electricity-generator.

However, the conventional electricity-generating device disclosed in Document 1 or 2 can be easily damaged or broken in use due to a complicated structure thereof, and thus may not stably generate electricity while moving with the motion of the sea surface.

In addition, when installed at a place where the sea surface does not appropriately move, rotational force corresponding to the motion of the sea surface may not be easily transmitted to the electricity-generator and thus electricity may not be efficiently generated.

Furthermore, electricity may not be appropriately generated depending on an installation location of the conventional electricity-generating device because the device moves with only horizontal motion or vertical motion of the sea surface, the device may not appropriately move with rapid motion of the sea surface and thus may be easily damaged, and generation of electricity using buoyancy may not be easily continued after the device is damaged.

### [Disclosure]

### [Technical Problem]

Therefore, the present invention has been made in view of the above problems, and it is one object of the present invention to provide a pendulum electricity-generating device using natural energy, the device being capable of stably, efficiently, and continuously generating electricity while moving with motion of the sea surface even when the sea surface rapidly moves or when the device is installed and used at a place where the sea surface irregularly moves.

It is another object of the present invention to provide a pendulum electricity-generating device using natural energy, the device being capable of efficiently preventing from being corroded due to salt contained in seawater by providing the essential part for generation of electricity using natural energy in a housing.

### [Technical Solution]

In accordance with one aspect of the present invention, provided is a pendulum electricity-generating device using natural energy, the device including a housing floating with buoyancy on a sea surface, floating wings integrally connected to two sides of the housing to rotate the housing in accordance with motion of the sea surface, a motive part mounted in the housing in a length direction of the housing, and gravitational bodies mounted in a length direction of the motive part not to rotate to correspond to the rotation of the housing and to transmit rotational force to the motive part in accordance with motion of the housing.

In this case, the housing may include an insertion plate protruding from a length-direction side of the housing and including a plurality of fastening holes, and a coupling plate provided at another length-direction side of the housing opposite the insertion plate and including a plurality of coupling holes corresponding to the fastening holes, and an inertial rotor and a waterproof lid may be coupled to the insertion plate or the coupling plate.

The floating wings may include first wings protruding from the two sides of the housing in a horizontal direction, and a second wing coupled to a side of the first wings to control a motion direction of the first wings.

The floating wings may be connected to gradually increase in volume in outward directions of the housing.

Ends of the first wings are configured as inclined surfaces to reduce friction of waves.

The motive part may include a gear bundle mounted in the housing in the length direction of the housing to bidirectionally rotate due to the received rotational force, a transmission for controlling the rotational force of the gear bundle, and an electricity-generator for generating electricity by receiving the rotational force from the transmission, and a plurality of the gravitational bodies may be provided to surround the gear bundle by disposing bearings therebetween, and to transmit the rotational force to the gear bundle.

A connection ring may be provided at a lower side of the housing and may be connected to a connection line connected to an anchor not to disturb the rotation of the housing.

In addition, the gear bundle may be mounted to rotate to correspond to the rotation of the housing, and the gravitational bodies may be mounted to maintain locations thereof on the gear bundle irrespective of the rotation of the housing and to transmit the rotational force to the gear bundle based on location variations of the housing and the gravitational bodies.

Fixing rings may be further provided at two length-direction sides of the housing to freely move along fixed structures installed on a sea floor.

### [Advantageous effects]

As apparent from the foregoing, the present invention may achieve the following effects.

First, a pendulum electricity-generating device using natural energy, according to the present invention, may stably generate electricity while flexibly moving with horizontal flow or vertical flow of the sea surface even when the device is installed and used at a place where the sea surface inappropriately moves.

Second, the device may not be easily damaged even when the sea surface rapidly moves, and corrosion of an essential part for generation of electricity using natural energy, due to salt contained in seawater may be efficiently prevented by providing the essential part in a housing, thereby increasing a service life of the device and reducing maintenance costs. In addition, efficiency of generating electricity may be maximized by providing a plurality of pendulum electricity-generating structures.

Third, since a plurality of electricity-generating parts for transmitting rotational force to a motive part are mounted around the motive part, the device may be appropriately and stably used even when the housing, floating wings, and the motive part rapidly move in accordance with the flow of the sea surface.

### [Description of Drawings]

FIG. 1 is a perspective view of a pendulum electricity-generating device using natural energy, according to the present invention.
FIG. 2 is an assembled perspective view of the pendulum electricity-generating device of the present invention.
FIG. 3 is a perspective view showing connection of a plurality of pendulum electricity-generating devices of the present invention.
FIG. 4 is a magnified view of a main part showing how an electricity-generating part is coupled to a motive part in the pendulum electricity-generating device of the present invention.
FIG. 5 is a side cross-sectional view of the pendulum electricity-generating device of the present invention.
FIG. 6 is an operational view of the pendulum electricity-generating device of the present invention.
FIG. 7 is a perspective view showing the pendulum electricity-generating device of the present invention is installed according to an embodiment.
FIG. 8 is a perspective view showing the pendulum electricity-generating device of the present invention is installed according to another embodiment.

### [Best mode]

The present invention will now be described more fully with reference to the accompanying drawings, in which embodiments of the invention are shown.

It should be understood that like reference numerals in the drawings denote like elements. Terms used hereinafter are used considering the functions in the present invention and may be changed according to a user's or operator's intention or usual practice. Accordingly, the terms will be defined based on the entire content of the description of the present invention.

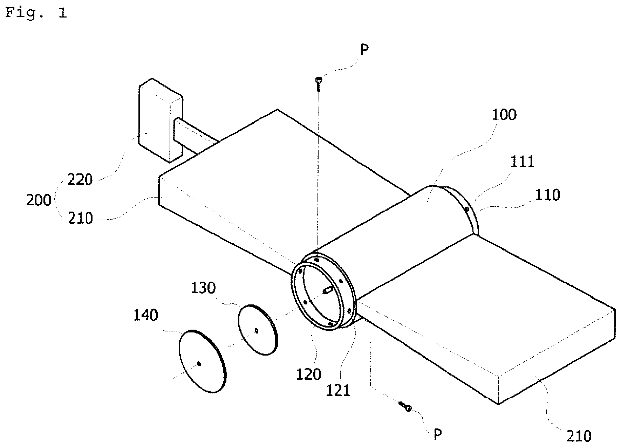

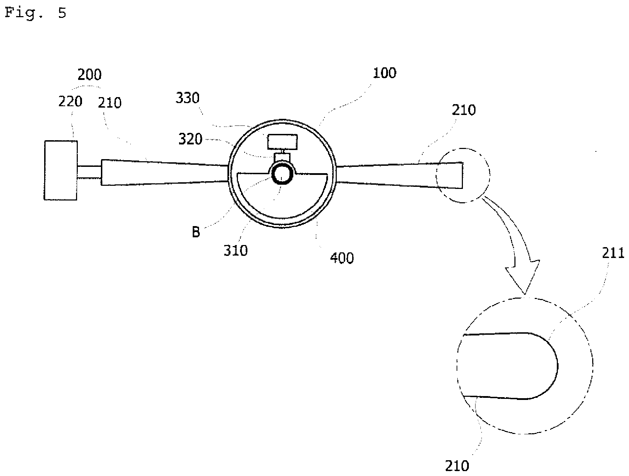

Initially, the configuration of a pendulum electricity-generating device using natural energy, according to the present invention, will now be described with reference to FIGS. 1 to 8.

The pendulum electricity-generating device of the present invention includes a housing 100 floating with buoyancy on a sea surface S, floating wings 200 integrally connected to two sides of the housing 100 to rotate the housing 100in accordance with motion of the sea surface S, a motive part 300 mounted in the housing 100in a length direction of the housing 100, and gravitational bodies 400 mounted in a length direction of the motive part 300 not to rotate to correspond to the rotation of the housing 100 and to transmit rotational force to the motive part 300 in accordance with motion of the housing 100.

The housing 100 is floated at a desired installation location of the pendulum electricity-generating device of the present invention on the sea surface S to maintain the installation location. To this end, the housing 100may be configured in a capsule shape having buoyancy.

In this case, the housing 100 may be made of a lightweight metal or plastic material not to be easily corroded and damaged even when installed and used on the sea surface for a long time.

As illustrated in FIGS. 1 to 4, the housing 100includes an insertion plate 110 protruding from a length-direction side of the housing 100 and including a plurality of fastening holes 111, and a coupling plate 120 provided at another length-direction side of the housing 100 opposite the insertion plate 110 and including a plurality of coupling holes 121 corresponding to the fastening holes 111.

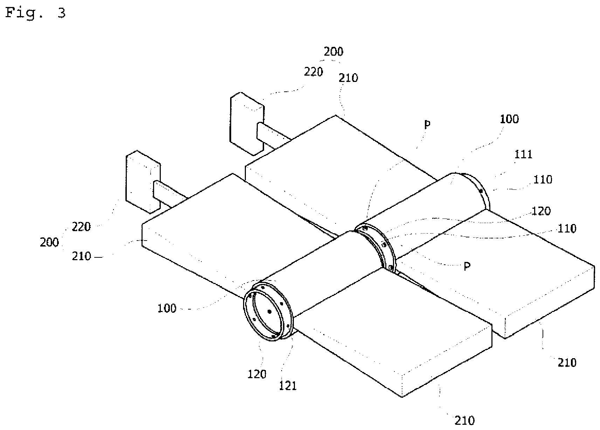

In the above-described configuration, to connect a plurality of the housings 100 of the pendulum electricity-generating device according to the present invention in the length direction thereof as illustrated in FIG. 3, the insertion plate 110 and the coupling plate 120 may have diameters set such that the insertion plate 110 and the coupling plate 120 are coupled to each other, and the fastening holes 111 provided in the insertion plate 110 and the coupling holes 121 provided in the coupling plate 120 may be configured in shapes corresponding to each other in such a manner that the fastening holes 111 and the coupling holes 121 are firmly fastened to each other by fastening members P. Therefore, even when the plurality of the housings 100 are connected in the length direction, electricity may be stably generated by preventing easy separation of the coupling parts thereof.

Although not specifically shown in the drawings of the present invention, by coupling the insertion plate 110 and the coupling plate 120to each other to be fitted to each other, permeation of seawater through the coupling parts between the insertion plate 110 and the coupling plate 120, which causes corrosion, may be safely prevented.

As illustrated in FIGS. 1 to 5, the floating wings 200 connected to the two sides of the housing 100 may extend outward from the housing 100 in a plate shape, and may be provided on the same horizontal line to appropriately rotate the housing 100 in accordance with the motion of the sea surface.

In this case, as illustrated in FIGS. 1 to 5, the floating wings 200 include first wings 210 protruding from the two sides of the housing 100in a horizontal direction, and a second wing 220 coupled to a side of the first wings 210 to control a motion direction of the first wings 210.

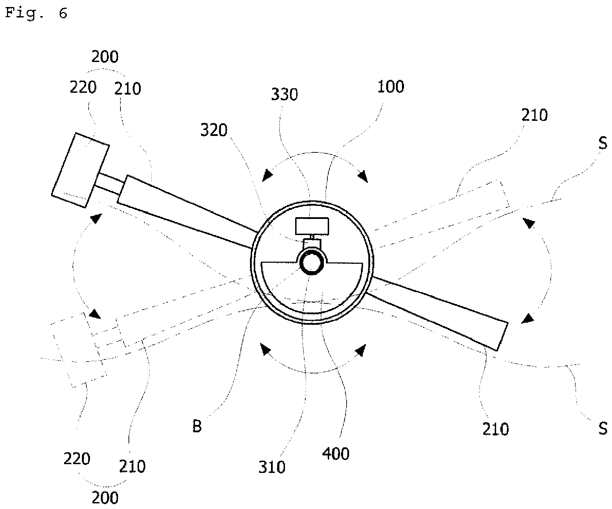

In the above-described configuration, as illustrated in FIG. 6, when the first wings 210vertically move due to the motion of the sea surface S, the housing 100 installed on the sea surface S may rotate in accordance with the motion of the first wings 210.

That is, as illustrated in FIG. 6, when the housing 100 is installed and used on the sea surface S, the first wings 210 of the floating wings 200 move in accordance with the motion of the sea surface S where the housing 100 is located, and, at the same time, the housing 100 bidirectionally rotates to correspond to the motion of the first wings 210.

As such, the housing 100 located on the sea surface Smay appropriately rotate to correspond to the motion of the sea surface S.

As illustrated in FIG. 6, the second wing 220 is configured to guide the motion direction of the first wings 210 even when the first wings 210 move in accordance with the motion of the sea surface S.

That is, the second wing 220 induces a direction parallel to a proceeding direction of the waves by receiving wave resistance, and guides the first wings 210 to a location where buoyancy variation of the waves is large.

Although the second wing 220 is provided in a direction perpendicular to the first wings 210in the present invention, the present invention is not limited thereto. The coupling directions and coupling locations of the first wings 210 and the second wing 220 may be variously changed as long as the second wing 220 may control the motion direction of the first wings 210.

The floating wings 220 are connected to gradually increase in volume in outward directions of the housing 100.

In the above-described configuration, by gradually increasing the volume of the floating wings 220, e.g., the first wings 210, in directions away from coupling parts with the housing 100, the floating wings 220 may more appropriately move in accordance with the motion of the sea surface S.

Particularly, although not specifically shown in the drawings of the present invention, by configuring the coupling parts between the housing 100 and the floating wings 200to have a small size equal to or less than a half of a wavelength of waves on the sea surface S, the housing 100 and the floating wings 200 may appropriately move due to the waves generated on the sea surface S.

In addition, by configuring the housing 100 and the floating wings 200 to be larger than the gravitational bodies 400mounted in the housing 100, motion of the gravitational bodies 400 located in the housing 100 may be prevented even when the housing 100 and the floating wings 200 move due to the motion of the sea surface S.

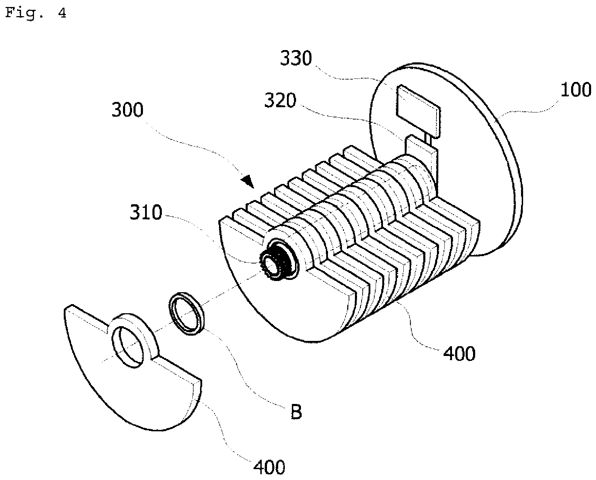

The above-described configuration will now be described in detail. As illustrated in FIGS. 4 and 6, the gravitational bodies 400 are configured to firmly maintain the locations thereof in the housing 100 even when the housing 100 and the floating wings 200 move due to the motion of the sea surface S. To this end, the motive part 300 of the present invention may connect the housing 100 and the gravitational bodies 400 to each other in such a manner that the gravitational bodies 400 do not rotate to correspond to the rotation of the housing 100.

In this case, the configuration of the motive part 300 according to the present invention uses the configuration disclosed in Korean Patent Application No. 10-2015-0078588. Korean Patent Application No. 10-2015-0078588 was filed by the applicant of the present invention to enhance a gear structure of a buoyantelectricity-generating device. In the present invention, since the motive part 300 is configured using the prior art of the present applicant, a detailed description of the motive part 300 will not be provided.

However, in the present invention, the motive part 300 includes a gear bundle 310 mounted in the housing 100 in the length direction of the housing 100 to bidirectionally rotate due to the received rotational force, a transmission 320 for controlling the rotational force of the gear bundle 310, and an electricity-generator 330 for generating electricity by receiving the rotational force from the transmission 320, and a plurality of the gravitational bodies 400 are provided to surround the gear bundle 310 by disposing bearings B therebetween, and to transmit the rotational force to the gear bundle 310.

Due to the above-described configuration, when the housing 100 rotates due to the motion of the floating wings 200, the gear bundle 310 of the motive part 300 rotates to correspond to the rotation of the housing 100. Particularly, since the gravitational bodies 400 connected to the gear bundle 310 rotate in a direction opposite to the rotation direction of the housing 100 to maintain the locations thereof on the gear bundle 310, the gear bundle 310 of the motive part 300 continuously and bidirectionally rotates and transmits the rotational force thereof to the transmission 320 and the electricity-generator 330 to correspond to a radius of rotation based on location variations of the housing 100 and the gravitational bodies 400, thereby generating electric energy.

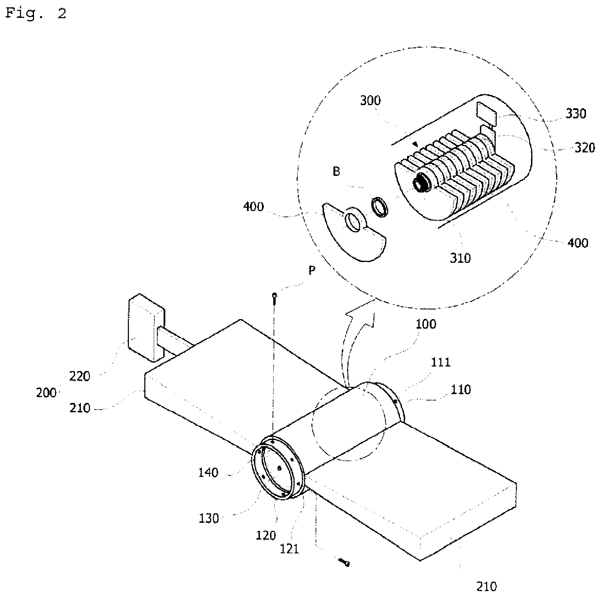

In this case, the gravitational bodies 400 are connected to the gear bundle 310 via the bearings B to firmly maintain the locations thereof in the housing 100 as described above. Due to the above-described configuration, the plurality of gravitational bodies 400 may be connected as illustrated in FIGS. 2 to 4 and thus may flexibly move with rapid motion of the sea surface S.

In addition, due to the above-described configuration, by configuring the gravitational bodies 400 in such a manner that the rotational force is transmitted to the gear bundle 310 of the motive part 300 and to the transmission 320 connected to the gear bundle 310 even when one or more of the gravitational bodies 400 connected to the motive part 300 are damaged, the electricity-generator 330 having received the rotational force may continuously operate.

Ends of the first wings 210 of the floating wings 200 may be configured as inclined surfaces 211 bent in a circular or linear shape to flexibly move with the flow of the sea surface S.

This serves to prevent application of strong pressure to the first wings 210 due to friction between the first wings 210 and the waves hitting the first wings 210. Due to the inclined surfaces 211, even when the sea surface S rapidly moves, electricity may be stably generated by preventing damage to the first wings 210.

A connection ring 150is provided at a lower side of the housing 100 and is connected to a connection line 510 connected to an anchor 500 not to disturb the rotation of the housing 100.

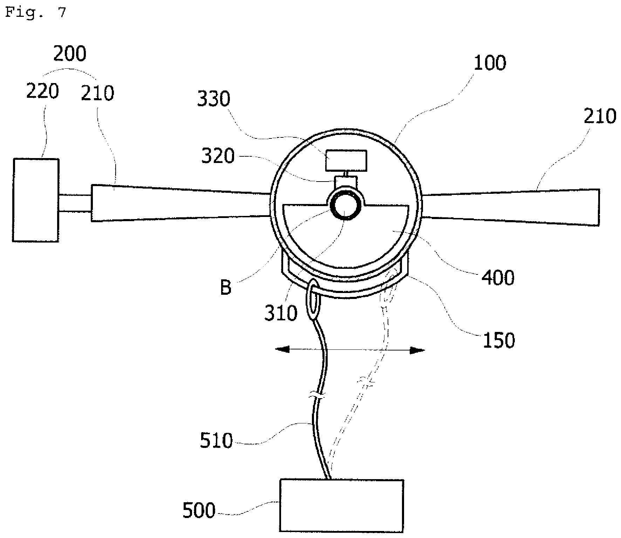

In the above-describe configuration, as illustrated in FIG. 7, when the connection line 510 of the anchor 500 installed on a sea floor S1 is used to prevent the housing 100 installed on the sea surface S from drifting away, the connection line 510 is connected not to disturb the rotation of the housing 100 in accordance with the motion of the sea surface S.

Due to the connection ring 150, electricity may be stably generated by preventing dislocation of the housing 100installed on the sea surface S due to the motion of the sea surface S.

Fixing rings 160 are further provided at two length-direction sides of the housing 100 to freely and vertically move along fixed structures 600 installed on the sea floor S1.

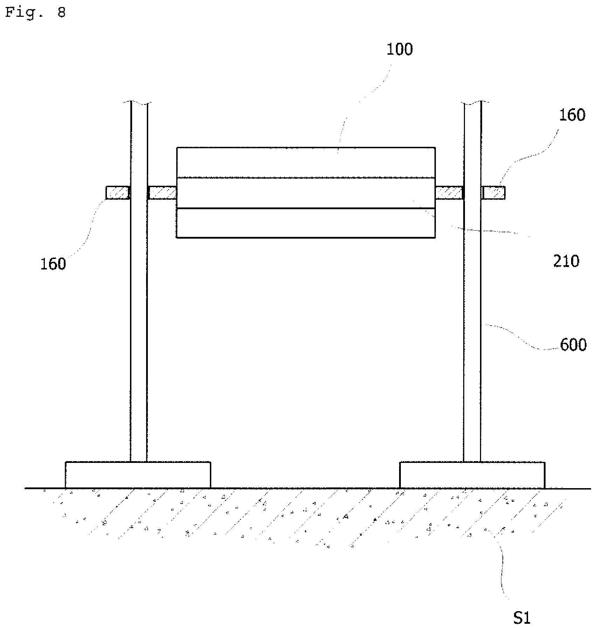

The above-described configuration serves to install the pendulum electricity-generating device according to the present invention in various forms as illustrated in FIG. 8, and may be variously changed based on user selection.

As described above, the pendulum electricity-generating device according to the present invention may stably and continuously generate electricity while flexibly moving with horizontal motion or vertical motion of the sea surface.

While the present invention has been particularly shown and described with reference to embodiments thereof, it will be understood by one of ordinary skill in the art that various changes in form and details may be made therein without departing from the spirit and scope of the present invention as defined by the following claims.

### - Description of the Reference numerals

### Explanation of Reference numerals designating the Major Elements of the Drawings>

100: Housing 110: Insertion plate
111: Fastening holes 120: Coupling plate
121: Coupling holes 130: Inertial rotor
140: Waterproof lid 150: Connection ring
160: Fixing rings 200: Floating wings
210: First wings 211: Inclined surfaces
220: Second wing 300: motive part
310: Gear bundle 320: Transmission
330: Electricity-generator 400: Gravitational bodies
500: Anchor 510: Connection line

## Claims

1. A pendulum electricity-generating device using natural energy, the device comprising:
a housing (100) floating with buoyancy on a sea surface S;
floating wings (200) integrally connected to two sides of the housing (100) to rotate the housing (100) in accordance with motion of the sea surface S;
a motive part (300) mounted in the housing (100) in a length direction of the housing 100; and
gravitational bodies (400) mounted in a length direction of the motive part (300) not to rotate to correspond to the rotation of the housing 100 and to transmit rotational force to the motive part 300 in accordance with motion of the housing (100).

2. The pendulum electricity-generating device according to claim 1, where the housing (100) comprises:
an insertion plate (110) protruding from a length-direction side of the housing (100) and comprising a plurality of fastening holes (111); and
a coupling plate (120) provided at another length-direction side of the housing (100) opposite the insertion plate (110) and comprising a plurality of coupling holes (121) corresponding to the fastening holes (111), and wherein an inertial rotor (130) and a waterproof lid (140) are coupled to the insertion plate (110) or the coupling plate (120).

3. The pendulum electricity-generating device according to claim 1, where the floating wings (200) comprise:
first wings (210) protruding from the two sides of the housing (100) in a horizontal direction; and
a second wing (220) coupled to a side of the first wings (210) to control a motion direction of the first wings (210).

4. The pendulum electricity-generating device according to claim 1, where the floating wings (200) are connected to gradually increase in volume in outward directions of the housing (100).

5. The pendulum electricity-generating device according to claim 3, where ends of the first wings (210) are configured as inclined surfaces (211) to reduce friction of waves.

6. The pendulum electricity-generating device according to claim 1, where the motive part (300) comprises:
a gear bundle (310) mounted in the housing (100) in the length direction of the housing (100) to bidirectionally rotate due to the received rotational force;
a transmission (320) for controlling the rotational force of the gear bundle (310); and
an electricity-generator (330) for generating electricity by receiving the rotational force from the transmission (320), and
wherein a plurality of the gravitational bodies (400) are provided to surround the gear bundle (310) by disposing bearings B therebetween, and to transmit the rotational force to the gear bundle (310).

7. The pendulum electricity-generating device according to claim 1, where a connection ring (150) is provided at a lower side of the housing (100) and is connected to a connection line (510) connected to an anchor (500) not to disturb the rotation of the housing (100).

8. The pendulum electricity-generating device according to claim 1 or 6, where the gear bundle (310) is mounted to rotate to correspond to the rotation of the housing (100), and
Wherein the gravitational bodies (400) are mounted to maintain locations thereof on the gear bundle (310) irrespective of the rotation of the housing (100) and to transmit the rotational force to the gear bundle (310) based on location variations of the housing (100) and the gravitational bodies (400).

9. The pendulum electricity-generating device according to claim 1, where fixing rings (160) are further provided at two length-direction sides of the housing (100) to freely move along fixed structures (600) installed on a sea floor S1.
